# EUROPEAN PATENT SPECIFICATION

(11) **EP 4 364 981 B1**
(45) Date of publication and mention of the grant of the patent: **27.08.2025**
(21) Application number: 23207972.3
(22) Date of filing: 06.11.2023
(51) Int. Cl.: B60C 25/05, B60C 25/138, G01M 1/04, G01M 17/02

(54) **WHEEL SERVICE MACHINE AND METHOD FOR LOCKING A WHEEL TO A WHEEL SERVICE MACHINE**
RADSERVICEMASCHINE UND VERFAHREN ZUM VERRIEGELN EINES RADES MIT EINER RADSERVICEMASCHINE
MACHINE DE SERVICE DE ROUE ET PROCÉDÉ DE VERROUILLAGE D'UNE ROUE SUR UNE MACHINE DE SERVICE DE ROUE

(30) Priority: 07.11.2022 IT 202200022821
(43) Date of publication of application: 08.05.2024
(73) Proprietor: NEXION S.p.A., 42015 Correggio (RE) (IT)
(72) Inventor: TORRESAN, Antonio, 42015 CORREGGIO (REGGIO EMILIA) (IT)
(74) Representative: Conti, Marco

(56) References cited:
- EP-A1- 3 357 712
- EP-A1- 3 418 708
- EP-B1- 3 067 223

## Description

This invention relates to a wheel service machine and to a method for locking a wheel to a wheel service machine.

Wheel service systems are widely used in the field of equipment for tyre mechanics, in particular, in the field of balancing machines and tyre changing machines.

In the prior art, wheel service machines usually comprise a wheel-holder unit having a mounting shaft configured for setting a wheel (or a rim) in rotation about a main axis of rotation, and a locking device configured to fix the wheel (or the rim) to the mounting shaft to rotate as one therewith and prevent relative movements between the wheel and the wheel-holder unit which could cause malfunctioning of the wheel service machine and/or damage to the wheel. Examples of such wheel service machines are known from patent documents EP3357712A1, EP3067223B1 and EP3418708A1.

Known in the prior art are wheel service machines comprising a manual locking device. For example, the machine of EP3357712A1 includes a sleeve or nut element, having the function to lock the rim to a rotating table, so that the rim of the wheel is interposed between the sleeve or nut element and the wheel, the sleeve or nut element being operatively coupled to the shaft. However, in the machine of EP3357712A1 the sleeve or nut element is not coupled to any actuator.

These manual locking devices have considerable disadvantages which are due, for example, to the time and effort required for the user to manipulate the device.

To overcome these disadvantages, state-of-the-art wheel service machines may comprise a power-driven locking device, typically activated by an actuator.

Usually, the actuator which drives the clamping elements is operated by means of a control pedal located at the side of the machine.

A solution of this kind is clearly inconvenient and unergonomic. Both in tyre changing machines and in balancing machines, the presence of the wheel on the machine may obstruct the user's view of the pedal. In this situation, the user is thus obliged to work under conditions of poor visibility and the locking operation may be particularly difficult when working on heavy and/or large wheels. This is a particularly serious drawback when the wheel service machine being used is a horizontal-axis balancing machine.

In some prior art solutions, to overcome this drawback, the actuator which drives the locking device may be operated using a pushbutton located on the locking device itself, as described, for example, in EP3067223B1. In this situation, the pushbutton is operated manually by an operator having one hand operatively engaged on the locking device.

This solution, however, although it gives the operator a better view of the operations being carried out on the wheel, does not contribute to making the machine more flexible and ergonomic in use.

The technical purpose of this invention, therefore, is to provide a wheel service machine and a method for locking a wheel to a shaft of a wheel service machine capable of overcoming the above mentioned disadvantages of the prior art.

This invention therefore has for an aim to provide a wheel service machine which is ergonomic and convenient to use.

Another aim of this invention is to provide a simple and reliable method for locking a wheel to a shaft of a wheel service machine.

The technical purpose indicated and the aims specified are substantially achieved by a wheel service machine and a method for locking a wheel to a shaft of a wheel service machine comprising the technical features set out in one or more of the accompanying claims. The dependent claims correspond to possible embodiments of the invention.

More specifically, the technical purpose indicated and the aims specified are achieved by a wheel service machine for carrying out operations on a wheel having a rim and a tyre.

The machine comprises a main body, resting on a floor, and a shaft protruding from the main body and rotating about a longitudinal axis of its own. The function of the shaft is to support the wheel rotatably.

In an embodiment illustrated, the machine is a balancing machine, configured to measure the static and dynamic imbalances of a wheel or of an individual rim, and the longitudinal axis is horizontal, that is to say, parallel to the floor.

In another embodiment illustrated, the machine may be a tyre changing machine where the longitudinal axis is vertical, that is, perpendicular to the floor.

The machine comprises an abutment element, connected to the shaft to rotate as one therewith. The abutment element is adapted to come into abutment with the rim supported by the shaft. In this situation, the abutment element constitutes a stop or restraining element which limits the movement of the rim along the shaft.

The abutment element is, for example, a plate that is integral with the shaft.

The machine also comprises a locking device that can be removably coupled to the shaft and is configured to slide along the longitudinal axis relative to the shaft between an active position and a spaced-apart position, away from the abutment element, where it does not interfere with the rim.

When the locking device is at the active position, close to the abutment element, the rim, which is interposed between the abutment element and the locking device itself, is fixed to the shaft.

In this situation, the rim is held against the abutment element and interposed between the latter and the locking device.

At the position of non-interference with the rim, on the other hand, the locking device is spaced from the abutment element.

In this situation, the rim may be moved away from the abutment element.

The machine also comprises a clamping element which is movably connected to the shaft or to the locking device to move along the longitudinal axis so as to clamp the locking device and the shaft to each other. In this situation, the clamping element allows locking the rim between the abutment element and the locking device itself.

More specifically, the clamping element engages the shaft and/or the locking device in such a way as to entrain the latter from the spaced-apart position to the active position where it "packs" the rim tightly between the abutment element and the locking device.

If the machine is a balancing machine, as in one of the embodiments illustrated, the clamping element and the locking device may be made, respectively, like the locking unit and the locking device described and claimed in application EP3985372 in the name of the present Applicant and incorporated herein by reference in connection with the locking unit and the locking device.

In effect, in the embodiment illustrated, the clamping element is made like the locking unit of application EP3985372. The clamping element comprises a first, internally hollow, elongate body, and a second body positioned inside the first body and movable relative thereto to adopt an open position and a closed position. The clamping element also comprises a first lever and a second lever, hinged to the second body and movable between an extracted position, where they protrude from the second body to prevent the second body from sliding inside the first body, and a retracted position, where they are withdrawn inside the second body to allow sliding.

The clamping element also comprises a holding element, such as a spring, for example, connected to the first and the second lever to hold each at the respective extracted position. As stated above, the locking device is made like the locking device of application EP3985372. The locking device is tubular to define a through hole to allow the shaft to pass through it. On its cylindrical, inside surface, the locking device also comprises a ratchet configured to engage the first and the second lever of the clamping element when they protrude from the second body.

In this situation, the clamping element engages the locking device, which is brought to the active position so that its first end comes into abutment against the rim.

If the machine is a tyre changing machine, as in another embodiment, the clamping element and the locking device may be made like the locking apparatus described and claimed in application EP2218591 B1.

More specifically, the locking device is a clamping rod having a first end and a second end. The first end is configured to be inserted into a hollow shaft, and more precisely, into a central hole of a supporting plate of the machine, while the second end can be gripped by a user. The clamping element comprises a slider consisting of a conical centring body, mounted slidably on the clamping rod, specifically by means of threading, with a collar to move the slider along the clamping rod. In this situation, to lock the rim on the supporting plate, the clamping rod is inserted into the shaft and the collar is moved axially along the clamping rod, thereby preventing the slider from rotating on the clamping rod itself.

Alternatively, again if the machine is a tyre changing machine, the clamping element and the locking device may be made like the locking device described and claimed in application RE2008A000086. More specifically, the locking device may be made like the locking means of the above mentioned patent application, that is to say, like a rod adapted to be inserted axially into a hole made in an element above it, that is to say, in a supporting plate of the machine, to lock the rim at a centred position. In this situation, the locking device also comprises a conical body associated coaxially with the rod. The clamping element may be made like the drive means of the above mentioned application so as to pull the locking means into the hole and lock them axially. In this situation, the clamping element comprises a slider that is movable axially and adapted to be coupled to the locking device in such a way as to hold it axially against itself.

Alternatively, again if the machine is a tyre changing machine, the clamping element and the locking device may be made like the locking device described and claimed in application EP1157861 B2. More specifically, the locking device may be embodied in the form of a hexagonal bar comprising annular protrusions which are flat at the top and conical at the bottom. This bar can be inserted into a hole made in a supporting plate of the machine. The bar is also provided with a locking cone that is coaxial with the bar itself. In this situation, the clamping element may be embodied in the form of a pawl acting against a leaf spring. More specifically, when the locking device is inserted into the hole, the conical part of the protrusion causes the pawl to rotate against the action of the leaf spring and the locking device cannot be extracted because the leaf spring keeps the pawl above the flat, upper surface of the protrusions.

In an embodiment of this invention, the machine also comprises a drive mechanism positioned on the machine and connected to the clamping element to move the latter along the shaft, along the longitudinal axis. In an alternative embodiment, the drive mechanism is positioned on the locking device.

In other words, the drive mechanism is configured to drive the clamping element in such a way that the latter moves along the shaft to tighten the locking device against the wheel rim. In this situation, the wheel rim is interposed and tightened between the abutment element and the locking device and is ready to be set in rotation as one with the shaft.

The machine also comprises an emitter, configured to generate and emit at least one command signal: for example, a signal to activate the drive mechanism or a signal to set the shaft in rotation and other signals of this kind.

The machine also comprises a command signal receiver, configured to drive the drive mechanism responsive to a command signal.

In use, therefore, to tighten the wheel rim between the abutment element and the locking device, the emitter emits a command signal to activate the drive mechanism. This command signal is received by the receiver, which activates the drive mechanism and thereby causes the clamping element to move along the shaft. In so doing, the locking device is brought from the spaced-apart position to the active position.

In a possible embodiment, the command signal is a wireless signal, such as an electromagnetic wave or a sound wave or an optical wave. In an embodiment, the emitter sends an encoded signal wirelessly to the receiver. In an embodiment, the wireless communication is via Bluetooth.

Alternatively, in another possible embodiment, communication between the emitter and the receiver is wired, that is to say, the machine comprises at least one cable connecting the emitter and the receiver and allowing them to exchange signals.

The machine further comprises at least one manually transportable drive unit, configured to be movably rested on a supporting surface, for example, on the floor.

The expression "manually transportable" is used to mean that the drive unit can be moved towards or away from the machine so it can placed at an ergonomic position making it convenient for an operator to use it.

According to an aspect of the invention, the drive unit is outside the locking device.

In other words, the drive unit is different and distinct from, and additional to, the locking device.

The drive unit can be placed at various different positions which can be chosen according to the user's preferences and/or the type of wheel being handled.

More specifically, the drive unit, when in use, is located away from the main body of the machine; more in general, is located away from the rest of the machine; for example, at a position that is safe and convenient for the user. When the drive unit is not in use, on the other hand, it can be placed on other components of the machine (such as on the main body of the machine).

Advantageously, the fact that the drive unit is not mounted on the machine means that it can be placed where it is most convenient for the user, as explained in more detail below.

By "supporting surface" is meant, for example, a surface that is easy for the operator to reach with a hand or a foot so as to act conveniently on the drive unit.

In a preferred embodiment, the supporting surface is flat.

In a possible embodiment, the drive unit comprises a supporting portion configured to come into contact with the supporting surface.

In an embodiment, the supporting portion is covered with an anti-slip material, such as rubber, for example. This aspect is particularly advantageous in that it prevents the drive unit, once positioned, from slipping out of place on the supporting surface compared to the required position where the user had previously placed it.

The drive unit comprises a control member movable between an inactive position and an active position. The control member is configured for giving the command to generate a command signal.

More specifically, when the control member passes from the inactive position to the active position, a command signal is generated. In an embodiment, the control member is monostable, where the inactive position is the stable state and the active position, the unstable one.

Preferably, the control member comprises a pedal or a pushbutton operable by a user with a foot or a hand, for example, to give the command to generate the command signal.

In this situation, with a foot or a hand resting on the control member, the user can press the control member to switch it from the inactive position to the active position.

As shown in the accompanying drawings, in the preferred embodiment, the control member has a substantially circular cross section.

This shape is particularly advantageous in that it does not require the control member to have a predetermined orientation to be moved between the inactive position and the active position. In effect, in use, once the drive unit has been placed at a predetermined position relative to the machine, the user can proceed directly to its activation, without worrying about suitably orienting the drive unit, unlike rocker switches/pushbuttons.

Alternatively to the embodiment with the manual control (hand/foot push switch), the control member may comprise a touch screen. In this situation, a command signal may be generated by touching/pressing the screen and/or vocally. For example, the drive unit might be embodied by a mobile phone or a tablet, where the screen acts as the control member.

In the case where the control member is embodied in the form of a screen and the drive unit is a tablet/mobile phone, it is also possible to install specific application software which the user can start when the control member has to generate the signal. In this situation, when the application software is started, the mobile phone and/or the tablet are made to generate the signal, for example, an encoded Bluetooth signal, to be sent to the receiver.

As shown in the accompanying drawings, the drive unit includes the emitter which is connected to the control member to generate the command signal responsive to a movement of the control member from the inactive position to the active position.

In other words, moving the control member from the inactive position to the active position activates the emitter so it emits a command signal. In this situation, if the command signal relates to the activation of the drive mechanism, the receiver receives it and proceeds to activating the drive mechanism.

In an embodiment, the command signal continues to be emitted the whole time the control member remains in the active position. In another embodiment, the command signal remains active for a predefined time interval.

Advantageously, the machine, for example, its drive mechanism, can be controlled from wherever the drive unit is positioned relative to it.

In use, therefore, to proceed, for example, to clamping the wheel on the shaft, a user puts the wheel in position, for example, in the case of a balancing machine, by placing it on the shaft. Next, from a position in the proximity of the drive unit (previously placed at a convenient position) the user presses the control member to move it to the active position. In this situation, the emitter generates a command signal corresponding to activating the drive mechanism. The signal is received by the receiver which thus activates the drive mechanism, causing the locking device to move to the active position, close to the abutment element. In an embodiment, when the user stops pressing the control member, the control member returns to the inactive position.

In a possible embodiment, the drive unit is programmable so that a predetermined number of switches of the control member from the inactive position to the active position corresponds to the emission of a certain command signal.

For example, if the control member is pressed twice in succession, the emitter emits a command signal to activate the drive mechanism, while pressing it three times in succession causes the emitter to emit a command signal to set the shaft in rotation, and so on. In this situation, the receiver is configured to receive the command signals from the emitter and to decode them so as to drive the part of the machine corresponding to the signal received.

The drive unit may also, for example, comprise a light-emitting device configured to emit at least one light signal corresponding to an operating state of the machine.

In this situation, the drive unit is provided with a light which, according to the number of times it blinks and/or its colour, tells the user what the operating state of the machine is.

Alternatively, or in addition to the light-emitting device, the drive unit may comprise a sound-emitting device configured to emit at least one acoustic signal corresponding to an operating state of the machine.

In this situation, the drive unit is provided with a sound emitter which, according to the number of sounds emitted and/or their intensity and/or their type, tells the user what the operating state of the machine is.

Since the drive unit is normally used in a workshop, it may be made, for example, at least partly from an impermeable material, so as to avoid possible damage or malfunctions due to spills of liquid (water, oil, etc) on the drive unit itself.

In a possible embodiment, the drive unit comprises a plurality of control members, each connected to the emitter and programmable in such a way that moving a predetermined control member from the inactive position to the active position causes a corresponding command signal to be generated.

In this situation, each control member can be activated independently of the others to cause the emitter to emit a predetermined command signal.

For example, a first control member, when activated, causes the command generated by the emitter to be used to set the shaft in rotation, while a second control member, when activated, causes the command generated by the emitter to be used to activate the drive means, and so on.

In other words, the drive unit may comprise more than one control member so that a single drive unit movable to a convenient position for the user can be used to activate and control different components of the machine.

In an embodiment, the drive unit is made in the form of a pedal set, where the control members are foot-operated pedals.

Alternatively, the drive unit is made in the form of a pushbutton switch panel, where the control members are hand-operated pushbuttons.

In both of the above solutions, the pedal set/pushbutton switch panel can be placed at the position most convenient for the user to control the machine from there without necessarily being in the proximity of the machine.

In another possible embodiment, the machine comprises a plurality of drive units independent of each other but reversibly connectable to each other to define a modular drive console.

In other words, each drive unit is suitably shaped and/or provided with clamping means such as to allow the different control members to be assembled to form a modular drive console (for example a pedal set or a pushbutton switch panel).

In an example embodiment, each drive unit may have an interchangeable cover.

This aspect is advantageous in that it protects the drive unit against shocks and, if the cover breaks, it can be easily replaced without having to replace the entire drive unit.

Preferably, the cover has a predetermined colour and/or texture and/or shape.

This aspect is advantageous in that the shape/texture/colour of the cover provides an easy means of identifying the control member concerned, hence immediately perceiving what signal it is programmed to emit and thus what operation the machine is capable of doing and controlling.

In the case where the machine comprises a drive unit provided with two or more control members, or in the case where the machine comprises a plurality of drive units that are reversibly connectable to each other, the covers allow the functions of the different control members to be clearly and directly differentiated.

In the case where the drive unit comprises a plurality of control members, a single cover for the entire drive unit may be provided.

This invention also relates to a method for locking a wheel having a rim and a tyre on a shaft of a wheel service machine, where the shaft rotates about a longitudinal axis of its own.

The method comprises a step of providing a wheel service machine. The machine shaft is adapted to support the wheel rotatably and comprises an abutment element, for example a supporting plate, adapted to come into contact with the rim.

The machine also comprises a locking device which can be removably coupled to the shaft and which is configured to lock the rim to the abutment element.

The machine also comprises a clamping element which is movably connected to the shaft or to the locking device to move along the longitudinal axis so as to clamp the locking device and the shaft to each other.

The machine also comprises a drive mechanism positioned on the machine itself or on the locking device and connected to the clamping element.

The machine also comprises a command signal receiver, configured to drive the drive mechanism responsive to a command signal, and an emitter, configured to generate and emit a command signal.

After the step of providing, the method comprises a step of coupling the rim to the shaft. During this step, in the case of a balancing machine, the rim is placed on the shaft.

The method also comprises a step of coupling the locking device to the shaft so that the rim is interposed between the locking device and the abutment element.

Next, the method comprises a step of activating the drive mechanism to intercept the locking device to lock the rim against the abutment element. In this situation, the rim is interposed between the abutment element and the locking device and is integral with the shaft.

The step of activating the drive mechanism comprises a step of generating a command signal via the emitter and a step of receiving the command signal via the receiver.

In other words, the drive mechanism is activated when a specific command signal is emitted by the emitter and received by the receiver mounted on the machine.

The step of generating the command signal comprises a step of providing a drive unit, separate from the locking device and including a control member, for example, a pushbutton or a pedal, to which the emitter is connected.

The emitter is located on the drive unit to be integral therewith.

The step of generating also comprises a step of positioning the drive unit on a supporting surface, for example, on the floor. During positioning, the user can place the drive unit at the position considered most suitable and ergonomic for them.

After positioning, the method comprises a step of moving the control member from an inactive position to an active position so that the emitter generates the command signal responsive to this movement. In this situation, the receiver receives the command and activates the drive mechanism so that the clamping element pulls the locking device into the active position, thereby locking the rim.

Further features and advantages of this invention are more apparent in the exemplary, hence non-limiting, description of an embodiment of a wheel service machine and of a method for locking a wheel to a shaft of a wheel service machine.

The description is set out below with reference to the accompanying drawings which are provided solely for purposes of illustration without limiting the scope of the invention and in which:
- Figure 1 shows a perspective view of a wheel service machine of this invention;
- Figure 2 shows an enlargement of Figure 1 where the wheel is not visible;
- Figure 3 shows a perspective view of another embodiment of the wheel service machine of this invention;
- Figure 4 shows a perspective view of a drive unit of the machine shown in Figure 1 or 3;
- Figure 5 shows an embodiment of a clamping element of the machine of Figure 1;
- Figure 6 shows an embodiment of a clamping element of the machine of Figure 3.

With reference to the accompanying drawings, the numeral 100 denotes a wheel service machine for performing operations on a wheel R having a rim C and a tyre P.

The machine 100 comprises a main body 20, resting on a floor, and a shaft 30 protruding from the main body 20 and rotating about a longitudinal axis A of its own. The function of the shaft 30 is to support the wheel R rotatably.

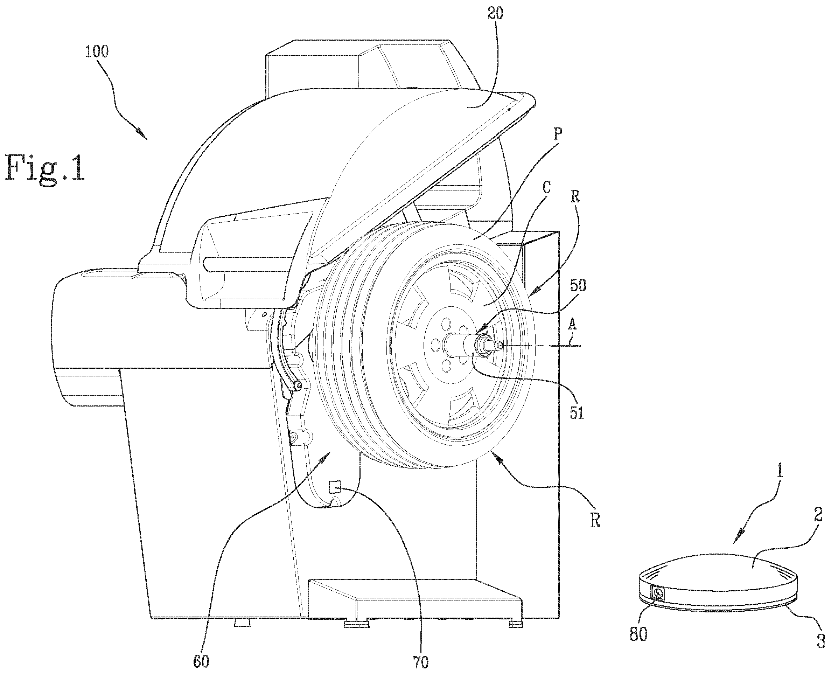

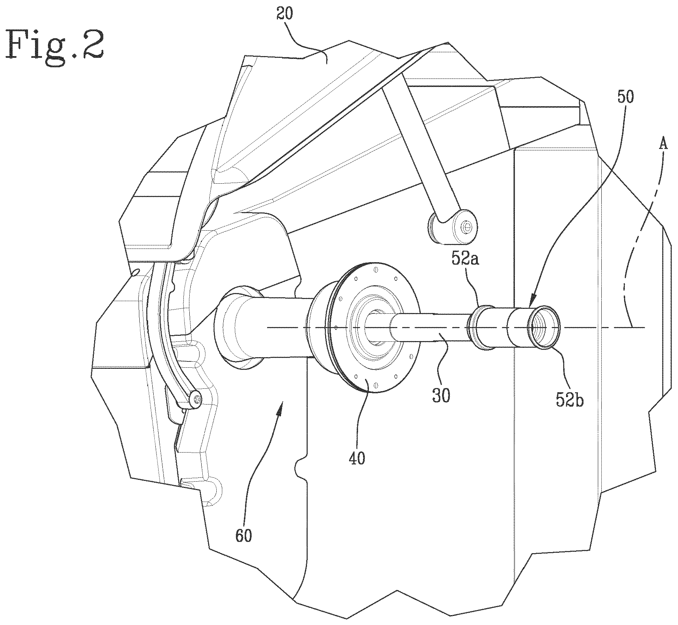

In the embodiment illustrated in Figures 1 and 2, the machine 100 is a balancing machine, configured to measure the static and dynamic imbalances of a wheel R or of an individual rim C. In this embodiment, the longitudinal axis A is horizontal, that is to say, parallel to the floor.

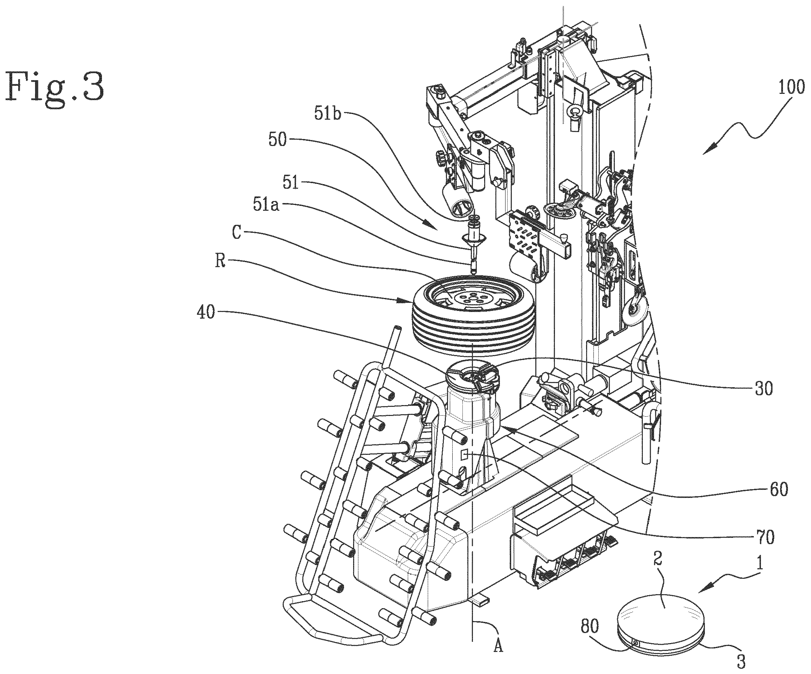

In the embodiment illustrated in Figure 3, the machine 100 is a tyre changing machine, where the longitudinal axis A is vertical, that is, perpendicular to the floor.

The machine 100 comprises an abutment element 40, connected to the shaft 30 to rotate as one therewith. The abutment element 40 is adapted to come into abutment against the rim C supported by the shaft 30. In this situation, the abutment element 40 constitutes a stop or restraining element which limits the movement of the rim C along the longitudinal axis A.

The abutment element 40 is, for example, a plate that is integral with the shaft 30.

The machine 100 also comprises a locking device 50 that can be removably coupled to the shaft 30 and is configured to slide along the longitudinal axis A relative to the shaft 30 between an active position and a spaced-apart position, away from the abutment element 40, where it does not interfere with the rim C.

When the locking device 50 is at the active position, close to the abutment element 40 (as shown by way of example, in Figure 1, the rim C, which is interposed between the abutment element 40 and the locking device 50 itself, is fixed to the shaft 30.

In this situation, the rim C is held against the abutment element 40 and interposed between the latter and the locking device 50.

At the position of non-interference with the rim C, on the other hand, the locking device 50 is spaced from the abutment element 40.

In this situation, the locking device 50 is "pulled off" the shaft 30 and the rim C can move away from the abutment element 40.

The machine 100 also comprises a clamping element 90 which is movably connected to the shaft 30 or to the locking device 50 to move along the longitudinal axis A so as to clamp the locking device 50 and the shaft 30 to each other. In this situation, the clamping element 90 allows locking the rim C between the abutment element 40 and the locking device 50 itself.

More specifically, the clamping element 90 engages the shaft 30 and/or the locking device 50 in such a way as to entrain the latter from the spaced-apart position to the active position where it "packs" the rim C tightly between the abutment element 40 and the locking device 50.

In the case where the machine 100 is a balancing machine, as shown in the embodiment of Figures 1 and 2, the locking device 50 is tubular to define a through hole allowing the shaft 30 to pass through it.

In this situation, the locking device 50 has a first end 52a abutted against the rim C and a second end 52b, opposite the first end 52a.

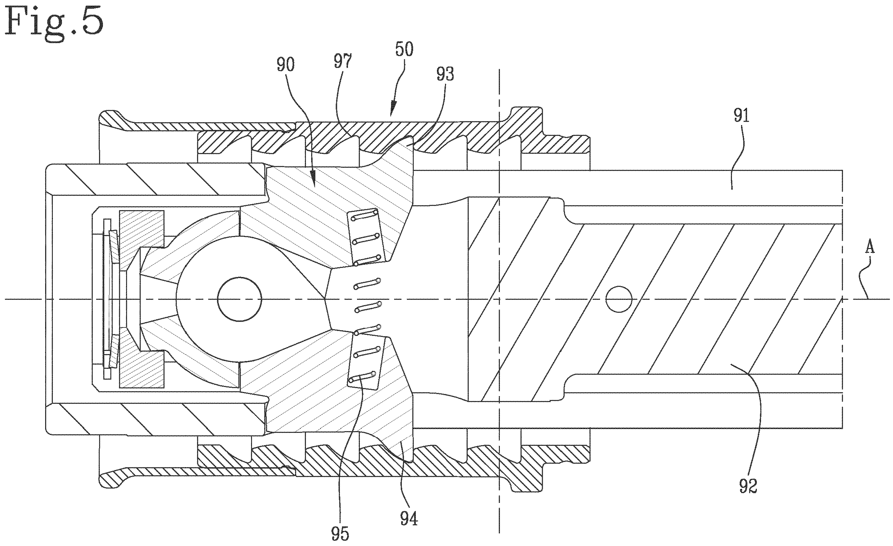

In the embodiment of the balancing machine shown in Figures 1 and 2, the clamping element 90 comprises a first, internally hollow, elongate body 91, and a second body 92 positioned inside the first body 91 and movable relative thereto to adopt an open position and a closed position (Figure 5). The clamping element 90 also comprises a first lever 93 and a second lever 94, hinged to the second body 92 and movable between an extracted position, where they protrude from the second body 92 to prevent the second body 92 from sliding inside the first body 91, and a retracted position, where they are withdrawn inside the second body 92 to allow sliding.

The clamping element 90 also comprises a holding element 95, such as a spring, for example, connected to the first and the second lever 93, 94 to hold each at the respective extracted position. In this embodiment, the locking device 50, on its cylindrical, inside surface, also comprises a ratchet 97 configured to engage the first and the second lever 93, 94 of the clamping element 90. In this situation, the clamping element 90 engages the locking device 50, which is brought to the active position so that its first end 52a comes into abutment against the rim C.

In the case where the machine 100 is a tyre changing machine, as shown in Figure 3, the locking device 50 is a clamping rod 51 having a first end 51a and a second end 51b. The first end 51a is configured to be inserted into the shaft 30 which, in this embodiment, is hollow, while the second end 51b can be gripped by a user.

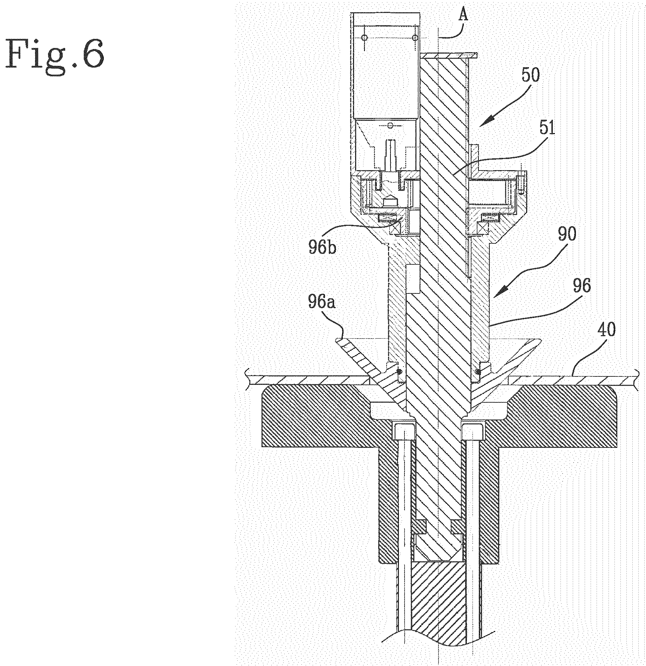

As shown in Figure 6, in this embodiment, the clamping element 90 comprises a slider 96 consisting of a conical centring body 96a, mounted slidably on the clamping rod 51, specifically by means of threading, with a collar 96b to move the slider 96 along the clamping rod 51. In this situation, to lock the rim C on the supporting plate, the clamping rod 51 is inserted into the shaft 30 and the collar 96b is moved axially along the clamping rod 51, thereby preventing the slider 96 from rotating on the clamping rod 51 itself.

According to this invention, the machine 100 also comprises a drive mechanism 60 (positioned within the machine, e.g., on the locking device 50). The drive mechanism 60 is connected to the clamping element 90 to move the latter along the shaft 30, for example, parallel to the longitudinal axis A. In this situation, the clamping element 90 entrains the locking device 50 along with it so as to tighten the rim C between the abutment element 40 and the locking device 50.

The machine 100 also comprises an emitter 80, configured to generate and emit at least one command signal: for example, a signal to activate the drive mechanism 60 or a signal to set the shaft 30 in rotation and other signals of this kind.

The machine 100 also comprises a command signal receiver 70, configured to drive the drive mechanism 60 responsive to a command signal.

In a possible embodiment, the command signal is a wireless signal, such as an electromagnetic wave or an optical wave or a sound wave. In an embodiment, the emitter 80 sends an encoded signal wirelessly to the receiver 70. In an embodiment, the wireless communication is via Bluetooth.

Alternatively, in another possible embodiment, communication between the emitter 80 and the receiver 70 is wired, that is to say, the machine 100 comprises at least one cable connecting the emitter 80 and the receiver 70 and allowing them to exchange signals.

The machine 100 further comprises at least one manually transportable drive unit 1, configured to be movably rested on a supporting surface, for example, on the floor.

In other words, the drive unit 1 is configured to be moved relative to the may body (or other components of the machine 100 separate from the drive unit 1) by a user and to be placed at a position where it is convenient and safe to use, as clarified below.

In a possible embodiment, the drive unit 1 comprises a supporting portion 3 configured to come into contact with the supporting surface.

The supporting portion 3 is preferably covered with an anti-slip material, such as rubber, for example, capable of preventing the drive unit 1 from slipping out of place after it has been positioned and is being used.

The drive unit 1 comprises a control member 2 movable between an inactive position and an active position. In a preferred embodiment, the inactive position is stable and the inactive position, unstable. In other terms, under rest conditions (that is, when not interacting with the operator), the drive unit tends to remain in the inactive position. The control member 2 is configured for giving the command to generate a command signal.

More specifically, when the control member 2 passes from the inactive position to the active position, a command signal is generated. In an embodiment, the command signal is a continuous or repeated signal which is generated the whole time the control member 2 remains in the active position. In another embodiment, the command signal is a signal with a predefined duration which is activated by the transition between the inactive position and the active position of the control member.

Preferably, the control member 2 comprises a pedal or a pushbutton operable by a user with a foot or a hand, for example, to give the command to generate the command signal. For example, with reference to the accompanying drawings, the pedal or the pushbutton is pressed vertically downwards so as to transition from the inactive position (raised and spaced from the supporting portion 3) to the active position (lowered and close to the supporting portion 3).

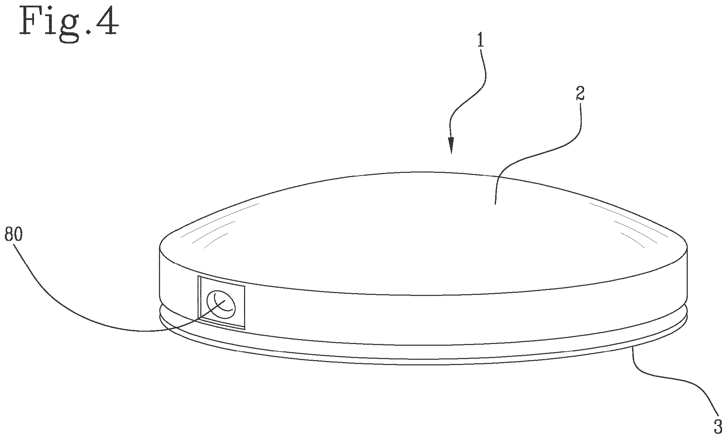

As shown, for example, in Figure 4, the control member 2 has a substantially circular cross section.

This shape is particularly advantageous in that it does not require the control member 2 to have a predetermined orientation to be moved between the inactive position and the active position. In effect, in use, once the drive unit 1 has been placed at a predetermined position relative to the machine 100, the user can proceed directly to its activation, without worrying about suitably orienting the drive unit 1, unlike rocker switches/pushbuttons.

As shown in the accompanying drawings, the drive unit 1 includes the emitter 80 (that is, the emitter 80 is located on the drive unit 1) which is connected to the control member 2 to generate the command signal responsive to a movement of the control member 2 from the inactive position to the active position.

In other words, moving the control member 2 from the inactive position to the active position activates the emitter 80 so it emits a command signal. In this situation, if the command signal relates to the activation of the drive mechanism 60, the receiver 70 receives it and proceeds to activating the drive mechanism 60.

In use, therefore, to proceed, for example, to clamping the wheel R on the shaft 30, the user first suitably positions the wheel R. Next, from a position in the proximity of the drive unit 1 (previously placed at a convenient position) the user operates on the control member 2 to move it to the active position. In this situation, the emitter 80 generates a command signal corresponding to activating the drive mechanism 60. The signal is received by the receiver 70 which thus activates the drive mechanism 60, causing the locking device 50 to slide to the active position, close to the abutment element 40.

In the case of the balancing machine shown in Figures 1, 2 and 5, the locking device 50 is made to slide and then locked on the shaft 30 by the interference of the first and the second lever 93, 94 with the ratchet 97 of the locking device 50.

In the case of the tyre changing machine shown in Figure 6, the locking device 50 is inserted into the shaft 30 and the collar 96b is actuated so as to move axially along the clamping rod 51, preventing the slider 96 from rotating on the clamping rod 51 and thus locking the wheel R.

The drive unit 1 may also, for example, comprise a light-emitting device configured to emit at least one light signal corresponding to an operating state of the machine 100.

In this situation, the drive unit 1 is provided with a light which, according to the number of times it blinks and/or its colour, tells the user what the operating state of the machine 100 is.

Alternatively, or in addition to the light-emitting device, the drive unit 1 may comprise a sound-emitting device configured to emit at least one acoustic signal corresponding to an operating state of the machine 100.

In this situation, the drive unit 1 is provided with a sound emitter which, according to the number of sounds emitted and/or their intensity and/or their type, tells the user what the operating state of the machine 100 is.

Since the drive unit 1 is normally used in a workshop, it may be made, for example, at least partly from an impermeable material, so as to avoid possible damage or malfunctions due to spills of liquid (water, oil, etc) on the drive unit 1 itself.

In a possible embodiment, the drive unit 1 may comprise a plurality of control members 2, each connected to the emitter 80 and programmable in such a way that moving a predetermined control member 2 from the inactive position to the active position causes a corresponding command signal to be generated.

In this situation, the drive unit 1 has a common supporting portion 3 for all the control members 2 and each control member 2 can be activated independently of the others to cause the emitter 80 to emit a predetermined command signal.

In other words, the drive unit 1 may comprise more than one control member 2 so that a single drive unit 1 movable to a convenient position for the user can be used to activate and control different components of the machine 100.

In an embodiment, the drive unit 1 is made in the form of a pedal set, where the control members 2 are foot-operated pedals.

Alternatively, the drive unit 1 may be made, for example, in the form of a pushbutton switch panel, where the control members 2 are hand-operated pushbuttons.

Alternatively to the embodiment with the hand/foot push switch, the control member 2 may comprise a touch screen (that is, a screen with "virtual" pushbuttons). In this situation, a command signal may be generated by touching/pressing the screen and/or vocally. For example, the drive unit 1 might be embodied by a mobile phone or a tablet, where the screen acts as the control member 2.

In the case where the control member 2 is embodied in the form of a screen and the drive unit 1 is a tablet/mobile phone, it is also possible to install specific application software which the user can start when the control member 2 has to generate the signal. In this situation, when the application software is started, the mobile phone and/or the tablet are made to generate the signal, for example, an encoded Bluetooth signal, to be sent to the receiver 70.

In another possible embodiment, the machine 100 comprises a plurality of drive units 1 independent of each other but reversibly connectable to each other to define a modular drive console.

In other words, each drive unit 1 is suitably shaped and/or provided with clamping means such as to allow the different control members 2 to be assembled to form a drive console (for example a pedal set or a pushbutton switch panel).

Each drive unit 1 may have an interchangeable cover.

This aspect is advantageous in that it protects the drive unit 1 against shocks and, if the cover breaks, it can be easily replaced without having to replace the entire drive unit 1.

Preferably, the cover has a predetermined colour and/or texture and/or shape to make it easily identifiable by the user.

Even in the case where the machine 100 comprises a drive unit 1 provided with two or more control members 2, or in the case where the machine 100 comprises a plurality of drive units 1 that are reversibly connectable to each other, the covers allow the functions of the different control members 2 to be clearly and directly differentiated.

In the case where the drive unit 1 comprises a plurality of control members 2 having a common supporting portion 3, a single cover for the entire drive unit 1 may be provided.

This invention also relates to a method for locking a wheel R having a rim C and a tyre P on a shaft 30 of a wheel service machine 100, where the shaft 30 rotates about a longitudinal axis A of its own.

The method comprises a step of providing a wheel service machine 100. The machine comprises the shaft 30 rotating about the longitudinal axis A and adapted to rotatably support the wheel R and an abutment element 40, for example, a supporting plate integral with the shaft 30 and adapted to come into contact with the rim C.

The machine 100 also comprises a locking device 50 which can be removably coupled to the shaft 30 and which is configured to lock the rim C to the abutment element 40.

The machine 100 also comprises a clamping element 90 which is movably connected to the shaft 30 or to the locking device 50 to move along the longitudinal axis A so as to clamp the locking device 50 and the shaft 30 to each other.

The machine 100 comprises a drive mechanism 60 (positioned within the machine, e.g. , on the locking device 50). The drive mechanism 60 is connected to the clamping element 90. Hence, the clamping element 90 is actuated by the drive mechanism 60 connected thereto.

The machine 100 also comprises a command signal receiver 70, configured to drive the drive mechanism 60 responsive to a command signal, and an emitter 80, configured to generate and emit a command signal.

The method comprises a step of coupling the rim C to the shaft 30.

During this step, in the case of a balancing machine, the rim C is placed on the shaft 30.

The method also comprises a step of coupling the locking device 50 to the shaft 30 so that the rim C is interposed between the locking device 50 and the abutment element 40.

In the case of the balancing machine of Figures 1 and 2, the locking device 50 is a hollow tube which is placed on the shaft 30.

In the case of the tyre changing machine of Figure 3, the locking device 50 is a clamping rod 51 configured to be inserted into the shaft 30 and to be connected to the drive mechanism 60.

Next, the method comprises a step of activating the drive mechanism 60 to intercept the locking device 50 to lock the rim C against the abutment element 40. In this situation, the rim C is interposed between the abutment element 40 and the locking device 50 and is integral with the shaft 30.

The step of activating the drive mechanism 60 comprises a step of generating a command signal via the emitter 80 and a step of receiving the command signal via the receiver 70.

In other words, the drive mechanism 60 is activated when a specific command signal is emitted by the emitter 80 and received by the receiver 70 mounted on the machine.

The step of generating the command signal comprises a step of providing a drive unit 1 including a control member 2, for example, a pushbutton or a pedal, connected to the emitter 80 located on the drive unit 1 and integral therewith.

The step of generating also comprises a step of positioning the drive unit 1 on a supporting surface, for example, on the floor.

During positioning, the user can place the drive unit 1 at the position considered most suitable and ergonomic for them.

After positioning, the method comprises a step of moving the control member 2 from an inactive position to an active position so that the emitter 80 generates the command signal responsive to this movement.

The control member 2 may comprise a pushbutton or a pedal. In this situation, the step of moving comprises pressing the pushbutton or pedal so as to cause the emitter 80 to emit the command signal.

In this situation, the receiver 70 receives the command and activates the drive mechanism 60 so that the clamping element 90 pulls the locking device 50 into the active position, thereby locking the rim C.

This invention achieves the preset aims and overcomes the disadvantages of the prior art.

More specifically, the presence of the manually transportable drive unit 1 makes using the machine 100 more flexible and ergonomic.

The fact that the emitter 80 is located on the drive unit 1 makes emitting the command signal easier because the drive unit 1 can be moved and positioned wherever convenient, without the risk of the wheel R or other parts of the machine 100 making it awkward to access the drive unit.

## Claims

1. A system of a wheel service machine (100) in combination with at least a manually transportable drive unit (1) for performing operations on a wheel (R) having a rim (C) and a tyre (P), the wheel service machine (100) comprising:
- a main body (20) and a shaft (30) protruding from the main body (20) and rotating about a longitudinal axis (A) of its own, the shaft (30) being adapted to rotatably support the wheel (R);
- an abutment element (40), connected to the shaft (30) to rotate as one therewith and configured for coming into abutment against the rim (C) supported by the shaft (30);
- a locking device (50) that can be removably coupled to the shaft (30) and is configured to slide along the longitudinal axis (A) relative to the shaft (30) between an active position, close to the abutment element (40) to lock the rim (C) between the abutment element (40) and the locking device (50), and a spaced-apart position, away from the abutment element (40), where it does not interfere with the rim (C);
- a clamping element (90) which is movably connected to the shaft (30) or to the locking device (50) to move along the longitudinal axis (A) so as to clamp the locking device (50) and the shaft (30) to each other;
- a drive mechanism (60) connected to the clamping element (90);
the system being **characterized in that** it comprises:
- a command signal receiver (70), configured to drive the drive mechanism (60) responsive to a command signal;
- an emitter (80), configured to generate and emit at least one command signal;
- at least one manually transportable drive unit (1) configured to be movably rested on a supporting surface and including a control member (2), movable between an inactive position and an active position, wherein the drive unit (1) includes the emitter (80), wherein the emitter (80) is connected to the control member (2) to generate the command signal responsive to a movement of the control member (2) from the inactive position to the active position.

2. The system according to claim 1, wherein the control member (2) comprises a pedal or a pushbutton operable by a user to give the command to generate the command signal.

3. The system according to claim 2, wherein the control member (2) has a substantially circular cross section.

4. The system according to any one of the preceding claims, wherein the drive unit (1) comprises a supporting portion (3) configured to come into contact with the supporting surface, the supporting portion (3) being covered with an anti-slip material.

5. The system according to any one of the preceding claims, wherein the command signal is a wireless signal and wherein the emitter (80) communicates with the receiver (70) through an encoded signal.

6. The system according to any one of claims 1 to 4, wherein communication between the emitter 80 and the receiver 70 is wired.

7. The system according to any one of the preceding claims, wherein the drive unit (1) comprises a plurality of control members (2), each connected to the emitter (80) and programmable in such a way that moving a predetermined control member (2) from the inactive position to the active position causes a corresponding command signal to be generated.

8. The system according to any one of claims 1 to 6, comprising a plurality of drive units (1) reversibly connectable to each other to define a modular drive console.

9. The system according to claim 7 or 8, wherein each control member (2) or each drive unit (1) has an interchangeable cover.

10. The system according to claim 9, the covers have different colour and/or textures and/or shapes.

11. The system according to any one of the preceding claims, wherein the drive unit (1) comprises:
- a light-emitting device configured to emit at least one light signal corresponding to an operating state of the machine (100); and/or
- a sound-emitting device configured to emit at least one acoustic signal corresponding to an operating state of the machine (100).

12. The system according to any one of the preceding claims, wherein the machine (100) is a tyre changing machine wherein the shaft (30) is hollow and wherein the locking device (50) is a clamping rod (51) having a first end (51a) and a second end (51b), wherein the first end (51a) is configured to be inserted into the hollow shaft (30) and to be connected to the drive mechanism (60), and the second end (51b) can be gripped by a user.

13. The system according to any one of claims 1 to 11, wherein the machine (100) is a balancing machine, wherein the locking device (50) is tubular and defines a through hole to allow the shaft (30) to pass through it.

14. A method for locking a wheel (R) having a rim (C) and a tyre (P) on a shaft (30) of a wheel service machine (100), wherein the shaft (30) rotates about a longitudinal axis (A) of its own and is adapted to support the wheel (R) rotatably, comprising the following steps:
- providing a system of a wheel service machine (100) in combination with at least a manually transportable drive unit (1), the system comprising:
the shaft (30);
an abutment element (40) integral with the shaft (30) and adapted to come into abutment against the rim (C);
a locking device (50) which can be removably coupled to the shaft (30) and which is configured to lock the rim (C) to the abutment element (40);
a clamping element (90) which is movably connected to the shaft (30) or to the locking device (50) to move along the longitudinal axis (A) so as to clamp the locking device (50) and the shaft (30) to each other;
a drive mechanism (60) connected to the clamping element (90);
a command signal receiver (70), configured to drive the drive mechanism (60) responsive to a command signal;
an emitter (80), configured to generate and emit a command signal;
- coupling the rim (C) to the shaft (30);
- coupling the locking device (50) to the shaft (30) so that the rim (C) is interposed between the locking device (50) and the abutment element (40);
- activating the drive mechanism (60) to intercept the locking device (50) to lock the rim (C) against the abutment element (40);
the step of activating the drive mechanism (60) comprising the steps of:
- generating a command signal via the emitter (80);
- receiving the command signal though the receiver (70);
**characterized in that** the step of generating the command signal comprises the steps of:
- providing the drive unit (1), the drive unit (1) including a control member (20) to which the emitter (80) is connected, the drive unit (1) including the emitter (80);
- positioning the drive unit (1) on a supporting surface;
- moving the control member (2) from an inactive position to an active position so that the emitter (80) generates the command signal responsive to this movement.

15. The method according to claim 14, wherein a plurality of drive units (1) is provided, the drive units (1) of the plurality of drive units (1) being reversibly connectable to each other to define a modular drive console.

## Patentansprüche

1. System einer Radservicemaschine (100) in Kombination mit mindestens einer von Hand transportierbaren Antriebseinheit (1) zum Durchführen von Vorgängen an einem Rad (R), aufweisend eine Felge (C) und einen Reifen (P), wobei die Radservicemaschine (100) Folgendes umfasst:
- einen Hauptkörper (20) und eine Welle (30), die aus dem Hauptkörper (20) hervorsteht und sich um ihre eigene Längsachse (A) dreht, wobei die Welle (30) dazu eingerichtet ist, das Rad (R) drehbar zu stützen;
- ein Anschlagselement (40), das mit der Welle (30) verbunden ist, um sich fest damit verbunden zu drehen, und das ausgelegt ist, um an der von der Welle (30) gestützten Felge (C) in Anschlag zu kommen;
- eine Festspannvorrichtung (50), die entfernbar mit der Welle (30) gekuppelt werden kann und ausgelegt ist, um entlang der Längsachse (A) relativ zur Welle (30) zwischen einer aktiven Position in der Nähe des Anschlagselements (40), um die Felge (C) zwischen dem Anschlagselement (40) und der Festspannvorrichtung (50) festzuspannen, und einer beabstandeten Position entfernt vom Anschlagselement (40), in der sie nicht mit der Felge (C) interferiert, verschoben zu werden;
- ein Klemmelement (90), das bewegbar mit der Welle (30) oder der Festspannvorrichtung (50) verbunden ist, um sich entlang der Längsachse (A) zu bewegen, sodass die Festspannvorrichtung (50) und die Welle (30) miteinander geklemmt werden;
- einen Antriebsmechanismus (60), der mit dem Klemmelement (90) verbunden ist,
wobei das System **dadurch gekennzeichnet ist, dass** es Folgendes umfasst:
- einen Befehlssignalempfänger (70), der ausgelegt ist, um den Antriebsmechanismus (60) als Reaktion auf ein Befehlssignal anzutreiben;
- einen Sender (80), der ausgelegt ist, um mindestens ein Befehlssignal zu generieren und auszusenden;
- mindestens eine von Hand transportierbare Antriebseinheit (1), die ausgelegt ist, um bewegbar auf eine stützende Oberfläche aufgesetzt zu werden, und einschließend ein Steuerelement (2), das zwischen einer inaktiven Position und einer aktiven Position bewegbar ist, wobei die Antriebseinheit (1) den Sender (80) einschließt, wobei der Sender (80) mit dem Steuerelement (2) verbunden ist, um das Befehlssignal als Reaktion auf eine Bewegung des Steuerelements (2) von der inaktiven Position in die aktive Position zu generieren.

2. System nach Anspruch 1, wobei das Steuerelement (2) ein Pedal oder einen Drucktaster umfasst, das bzw. der von einem Nutzer bedienbar ist, um den Befehl zum Generieren des Befehlssignals zu erteilen.

3. System nach Anspruch 2, wobei das Steuerelement (2) einen im Wesentlichen kreisförmigen Querschnitt aufweist.

4. System nach einem der vorhergehenden Ansprüche, wobei die Antriebseinheit (1) einen stützenden Abschnitt (3) umfasst, der ausgelegt ist, um mit der stützenden Oberfläche in Kontakt zu kommen, wobei der stützende Abschnitt (3) mit einem rutschfesten Material bedeckt ist.

5. System nach einem der vorhergehenden Ansprüche, wobei das Befehlssignal ein drahtloses Signal ist und wobei der Sender (80) mit dem Empfänger (70) durch ein verschlüsseltes Signal kommuniziert.

6. System nach einem der Ansprüche 1 bis 4, wobei die Kommunikation zwischen dem Sender 80 und dem Empfänger 70 per Draht erfolgt.

7. System nach einem der vorhergehenden Ansprüche, wobei die Antriebseinheit (1) eine Vielzahl von Steuerelementen (2) umfasst, die jeweils mit dem Sender (80) verbunden und so programmierbar sind, dass das Bewegen eines vorbestimmten Steuerelements (2) von der inaktiven Position in die aktive Position bewirkt, dass ein entsprechendes Befehlssignal generiert wird.

8. System nach einem der Ansprüche 1 bis 6, umfassend eine Vielzahl von Antriebseinheiten (1), die reversierbar miteinander verbindbar sind, um eine modulare Antriebskonsole zu definieren.

9. System nach Anspruch 7 oder 8, wobei ein jedes Steuerelement (2) oder eine jede Antriebseinheit (1) eine austauschbare Abdeckung aufweist.

10. System nach Anspruch 9, wobei die Abdeckungen unterschiedliche Farben und/oder Texturen und/oder Formen aufweisen.

11. System nach einem der vorhergehenden Ansprüche, wobei die Antriebseinheit (1) Folgendes umfasst:
- eine lichtemittierende Vorrichtung, die ausgelegt ist, um mindestens ein Lichtsignal zu emittieren, das einem Betriebszustand der Maschine (100) entspricht, und/oder
- eine schallemittierende Vorrichtung, die ausgelegt ist, um mindestens ein akustisches Signal zu emittieren, das einem Betriebszustand der Maschine (100) entspricht.

12. System nach einem der vorhergehenden Ansprüche, wobei die Maschine (100) eine Reifenwechselmaschine ist, wobei die Welle (30) hohl ist und wobei die Festspannvorrichtung (50) eine Klemmstange (51) ist, aufweisend ein erstes Ende (51a) und ein zweites Ende (51b), wobei das erste Ende (51a) ausgelegt ist, um in die hohle Welle (30) eingefügt und mit dem Antriebsmechanismus (60) verbunden zu werden, und das zweite Ende (51b) von einem Nutzer gegriffen werden kann.

13. System nach einem der Ansprüche 1 bis 11, wobei die Maschine (100) eine Auswuchtmaschine ist, wobei die Festspannvorrichtung (50) rohrförmig ist und ein Durchführungsloch definiert, um der Welle (30) zu erlauben, durch sie hindurchgeführt zu werden.

14. Verfahren zum Festspannen eines Rads (R), aufweisend eine Felge (C) und einen Reifen (P), an einer Welle (30) einer Radservicemaschine (100), wobei sich die Welle (30) um eine eigene Längsachse (A) dreht und dazu eingerichtet ist, das Rad (R) drehbar zu stützen, umfassend die folgenden Schritte:
- Bereitstellen eines Systems einer Radservicemaschine (100) in Kombination mit mindestens einer von Hand transportierbaren Antriebseinheit (1), wobei das System Folgendes umfasst:
die Welle (30);
ein Anschlagselement (40), das in einem Stück mit der Welle (30) ausgebildet und dazu eingerichtet ist, an der Felge (C) in Anschlag zu kommen;
eine Festspannvorrichtung (50), die entfernbar mit der Welle (30) gekuppelt werden kann und die ausgelegt ist, um die Felge (C) am Anschlagselement (40) festzuspannen;
ein Klemmelement (90), das bewegbar mit der Welle (30) oder der Festspannvorrichtung (50) verbunden ist, um sich entlang der Längsachse (A) zu bewegen, sodass die Festspannvorrichtung (50) und die Welle (30) miteinander geklemmt werden;
einen Antriebsmechanismus (60), der mit dem Klemmelement (90) verbunden ist;
einen Befehlssignalempfänger (70), der ausgelegt ist, um den Antriebsmechanismus (60) als Reaktion auf ein Befehlssignal anzutreiben;
einen Sender (80), der ausgelegt ist, um ein Befehlssignal zu generieren und auszusenden;
- Kuppeln der Felge (C) mit der Welle (30);
- Kuppeln der Festspannvorrichtung (50) an der Welle (30), sodass die Felge (C) zwischen der Festspannvorrichtung (50) und dem Anschlagselement (40) eingesetzt ist;
- Aktivieren des Antriebsmechanismus (60), um die Festspannvorrichtung (50) abzufangen, um die Felge am Anschlagselement (40) festzuspannen,
wobei der Schritt zum Aktivieren des Antriebsmechanismus (60) die folgenden Schritte umfasst:
- Generieren eines Befehlssignals über den Sender (80);
- Empfangen des Befehlssignals durch den Empfänger (70), **dadurch gekennzeichnet, dass** der Schritt zum Generieren des Befehlssignals die folgenden Schritte umfasst:
- Bereitstellen der Antriebseinheit (1), wobei die Antriebseinheit (1) ein Steuerelement (20) einschließt, mit dem der Sender (80) verbunden ist, wobei die Antriebseinheit (1) den Sender (80) einschließt;
- Positionieren der Antriebseinheit (1) auf einer stützenden Oberfläche;
- Bewegen des Steuerelements (2) von einer inaktiven Position in eine aktive Position, sodass der Sender (80) das Befehlssignal als Reaktion auf diese Bewegung generiert.

15. Verfahren nach Anspruch 14, wobei eine Vielzahl von Antriebseinheiten (1) bereitgestellt ist und die Antriebseinheiten (1) der Vielzahl von Antriebseinheiten (1) reversierbar miteinander verbindbar sind, um eine modulare Antriebskonsole zu definieren.

## Revendications

1. Système d'une machine de service de roue (100) en combinaison avec au moins une unité d'entraînement transportable manuellement (1) pour effectuer des opérations sur une roue (R) ayant une jante (C) et un pneu (P), la machine de service de roue (100) comprenant :
- un corps principal (20) et un arbre (30) faisant saillie du corps principal (20) et tournant autour d'un axe longitudinal (A) propre, l'arbre (30) étant adapté pour supporter de manière rotative la roue (R) ;
- un élément de butée (40), relié à l'arbre (30) pour tourner d'un seul tenant avec lui et configuré pour venir en butée contre la jante (C) supportée par l'arbre (30) ;
- un dispositif de verrouillage (50) qui peut être couplé de manière amovible à l'arbre (30) et est configuré pour coulisser le long de l'axe longitudinal (A) par rapport à l'arbre (30) entre une position active, proche de l'élément de butée (40) pour verrouiller la jante (C) entre l'élément de butée (40) et le dispositif de verrouillage (50), et une position espacée, éloignée de l'élément de butée (40), où il n'interfère pas avec la jante (C) ;
- un élément de serrage (90) qui est relié de manière mobile à l'arbre (30) ou au dispositif de verrouillage (50) pour se déplacer le long de l'axe longitudinal (A) de manière à serrer le dispositif de verrouillage (50) et l'arbre (30) l'un à l'autre ;
- un mécanisme d'entraînement (60) relié à l'élément de serrage (90) ;
le système étant **caractérisé en ce qu'**il comprend:
- un récepteur de signal de commande (70), configuré pour entraîner le mécanisme d'entraînement (60) en réponse à un signal de commande ;
- un émetteur (80), configuré pour générer et émettre au moins un signal de commande ;
- au moins une unité d'entraînement transportable manuellement (1) configurée pour reposer de manière mobile sur une surface de support et incluant un élément de contrôle (2), mobile entre une position inactive et une position active, dans lequel l'unité d'entraînement (1) inclut l'émetteur (80), dans lequel l'émetteur (80) est relié à l'élément de contrôle (2) pour générer le signal de commande en réponse à un mouvement de l'élément de contrôle (2) de la position inactive à la position active.

2. Système selon la revendication 1, dans lequel l'élément de contrôle (2) comprend une pédale ou un bouton-poussoir actionnable par un utilisateur pour donner la commande de générer le signal de commande.

3. Système selon la revendication 2, dans lequel l'élément de contrôle (2) a une section transversale substantiellement circulaire.

4. Système selon l'une quelconque des revendications précédentes, dans lequel l'unité d'entraînement (1) comprend une portion de support (3) configurée pour entrer en contact avec la surface de support, la portion de support (3) étant recouverte d'un matériau antidérapant.

5. Système selon l'une quelconque des revendications précédentes, dans lequel le signal de commande est un signal sans fil et dans lequel l'émetteur (80) communique avec le récepteur (70) par l'intermédiaire d'un signal codé.

6. Système selon l'une quelconque des revendications 1 à 4, dans lequel la communication entre l'émetteur 80 et le récepteur 70 est câblée.

7. Système selon l'une quelconque des revendications précédentes, dans lequel l'unité d'entraînement (1) comprend une pluralité d'éléments de contrôle (2), chacun relié à l'émetteur (80) et programmable de telle sorte que déplacer un élément de contrôle (2) prédéterminé de la position inactive à la position active provoque la génération d'un signal de commande correspondant.

8. Système selon l'une quelconque des revendications 1 à 6, comprenant une pluralité d'unités d'entraînement (1) pouvant être reliées de manière réversible les unes aux autres pour définir une console d'entraînement modulaire.

9. Système selon la revendication 7 ou 8, dans lequel chaque élément de contrôle (2) ou chaque unité d'entraînement (1) a un couvercle interchangeable.

10. Système selon la revendication 9, dans lequel les couvercles ont des couleurs et/ou des textures et/ou des formes différentes.

11. Système selon l'une quelconque des revendications précédentes, dans lequel l'unité d'entraînement (1) comprend :
- un dispositif électroluminescent, configuré pour émettre au moins un signal lumineux correspondant à un état de fonctionnement de la machine (100) ; et/ou
- un dispositif d'émission sonore, configuré pour émettre au moins un signal acoustique correspondant à un état de fonctionnement de la machine (100).

12. Système selon l'une quelconque des revendications précédentes, dans lequel la machine (100) est une machine de changement de pneu, dans lequel l'arbre (30) est creux et dans lequel le dispositif de verrouillage (50) est une tige de serrage (51) ayant une première extrémité (51a) et une seconde extrémité (51b), dans lequel la première extrémité (51a) est configurée pour être insérée dans l'arbre creux (30) et pour être reliée au mécanisme d'entraînement (60), et la seconde extrémité (51b) peut être saisie par un utilisateur.

13. Système selon l'une quelconque des revendications 1 à 11, dans lequel la machine (100) est une machine d'équilibrage, dans lequel le dispositif de verrouillage (50) est tubulaire et définit un trou traversant pour permettre à l'arbre (30) de le traverser.

14. Procédé de verrouillage d'une roue (R) ayant une jante (C) et un pneu (P) sur un arbre (30) d'une machine de service de roue (100), dans lequel l'arbre (30) tourne autour d'un axe longitudinal (A) propre et est adapté pour supporter la roue (R) de manière rotative, comprenant les étapes suivantes :
- fournir un système d'une machine de service de roue (100) en combinaison avec au moins une unité d'entraînement transportable manuellement (1), le système comprenant:
l'arbre (30) ;
un élément de butée (40) solidaire de l'arbre (30) et adapté pour venir en butée contre la jante (C) ;
un dispositif de verrouillage (50) qui peut être couplé de manière amovible à l'arbre (30) et qui est configuré pour verrouiller la jante (C) à l'élément de butée (40) ;
un élément de serrage (90) qui est relié de manière mobile à l'arbre (30) ou au dispositif de verrouillage (50) pour se déplacer le long de l'axe longitudinal (A) de manière à serrer le dispositif de verrouillage (50) et l'arbre (30) l'un à l'autre ;
un mécanisme d'entraînement (60) relié à l'élément de serrage (90) ;
un récepteur de signal de commande (70), configuré pour entraîner le mécanisme d'entraînement (60) en réponse à un signal de commande ;
un émetteur (80), configuré pour générer et émettre un signal de commande ;
- coupler la jante (C) à l'arbre (30) ;
- coupler le dispositif de verrouillage (50) à l'arbre (30) de sorte que la jante (C) soit interposée entre le dispositif de verrouillage (50) et l'élément de butée (40) ;
- activer le mécanisme d'entraînement (60) pour intercepter le dispositif de verrouillage (50) afin de verrouiller la jante (C) contre l'élément de butée (40) ; l'étape d'activer le mécanisme d'entraînement (60) comprenant les étapes de :
- générer un signal de commande via l'émetteur (80) ;
- recevoir le signal de commande par l'intermédiaire du récepteur (70) ;
**caractérisé en ce que** l'étape de générer le signal de commande comprend les étapes de :
- fournir l'unité d'entraînement (1), l'unité d'entraînement (1) incluant un élément de contrôle (20) auquel l'émetteur (80) est relié, l'unité d'entraînement (1) incluant l'émetteur (80) ;
- positionner l'unité d'entraînement (1) sur une surface de support ;
- déplacer l'élément de contrôle (2) d'une position inactive à une position active de sorte que l'émetteur (80) génère le signal de commande en réponse à ce mouvement.

15. Procédé selon la revendication 14, dans lequel une pluralité d'unités d'entraînement (1) est fournie, les unités d'entraînement (1) de la pluralité d'unités d'entraînement (1) pouvant être reliées de manière réversible les unes aux autres pour définir une console d'entraînement modulaire.
